(19) Europäisches Patentamt
European Patent Office
Office européen des brevets

(11) **EP 3 159 483 A1**

(12) **EUROPÄISCHE PATENTANMELDUNG**

(43) Veröffentlichungstag:
26.04.2017   Patentblatt 2017/17

(51) Int Cl.:
*F01D 5/30* $^{(2006.01)}$

(21) Anmeldenummer: 15191026.2

(22) Anmeldetag: **22.10.2015**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA**

(71) Anmelder: **Siemens Aktiengesellschaft
80333 München (DE)**

(72) Erfinder:
• **Beckmann, Björn
47057 Duisburg (DE)**
• **Costamagna, Karin
45473 Mülheim a.d.Ruhr (DE)**
• **Dannenberg, Antje
45470 Mülheim an der Ruhr (DE)**
• **Kolk, Karsten
45479 Mülheim a.d. Ruhr (DE)**
• **Rollmann, Georg
45472 Mülheim Ruhr (DE)**
• **Schmalen, Anna
47119 Duisburg (DE)**
• **Schmitz, Sebastian
10437 Berlin (DE)**
• **Sieber, Uwe
45476 Mülheim an der Ruhr (DE)**
• **Zelmer, Dimitri
45329 Essen (DE)**

(54) **SCHAUFELTRÄGER ZUR BEFESTIGUNG VON LAUFSCHAUFELN EINER THERMISCHEN STRÖMUNGSMASCHINE**

(57)     Die Erfindung betrifft einen Schaufelträger (10) zur Befestigung von Laufschaufeln (32) einer thermischen Strömungsmaschine, welcher um dessen zentrale Rotationsachse (14) rotierbar ist und in seiner Außenumfangsfläche (22) zumindest eine sich in Umfangsrichtung erstreckende endlose Haltenut (24) zur Befestigung der Laufschaufeln (32) aufweist, wobei die Haltenut (24) zwei bezogen auf die Rotationsachse (14) axial einander gegenüberliegende Seitenwände (26) umfasst, die jeweils zumindest einen sich in die Haltenut (24) hineinragenden, zumindest größtenteils umlaufenden Vorsprung (28) mit einer zur Rotationsachse (14) weisenden Anlagefläche (30) aufweisen, wobei zwischen jeder Anlagefläche (30) und einer davon radial weiter innen angeordneten Teilfläche (29) der jeweiligen Seitenwand eine im Querschnitt gekrümmte Verrundung (33) vorgesehen ist. Um einen Schaufelträger (10) bereitzustellen, dessen niederzyklische Lebensdauer verlängert ist, wird vorgeschlagen, dass die Verrundung (33) sich - im Querschnitt betrachtet - aus drei aufeinanderfolgenden Kreisbögen $(B_1, B_2, B_3)$ zusammensetzt, wobei der mittlere Kreisbogen $(B_2)$ einen größeren Radius $(R_2)$ aufweist als die beiden benachbarten Kreisbögen $(B_1, B_3)$.

FIG 3

EP 3 159 483 A1

**Beschreibung**

Die Erfindung betrifft einen Schaufelträger zur Befestigung von weiteren Bestandteilen eines Rotors einer thermischen Strömungsmaschine, insbesondere Laufschaufeln, welcher um dessen zentrale Rotationsachse rotierbar ist und in einer nach außen weisenden Fläche zumindest eine Haltenut zur Befestigung einer oder mehrerer Laufschaufeln aufweist, wobei die Haltenut zwei bezogen auf die Rotationsachse axial einander gegenüberliegende profilierte Seitenwände umfasst, die jeweils zumindest einen sich in die Haltenut hineinragenden, zumindest größtenteils umlaufenden Vorsprung mit einer zur Rotationsachse weisenden Anlagefläche aufweisen, wobei zwischen jeder Anlagefläche und einer davon radial weiter innen angeordneten Teilfläche der jeweiligen Seitenwand eine im Querschnitt gekrümmte Verrundung vorgesehen ist.

Derartige Schaufelträger sind aus dem umfangreichen Stand der Technik zu thermischen Strömungsmaschinen bestens bekannt, wobei unter thermischen Strömungsmaschinen insbesondere Gasturbinen, Dampfturbinen und Verdichter zu verstehen sind. Dabei sind sowohl stationäre als auch Flugzeug-Triebwerke den Gasturbinen zuzurechnen. Deren drehbaren Schaufelträger, die gemeinhin auch als Rotor bezeichnet werden, sind üblicherweise entweder als Radscheiben oder als Wellenblock ausgestaltet und dienen zur Befestigung ihrer Laufschaufeln. Letztere sind häufig über eine hammerförmige oder schwalbenschwanzförmige Verhakung an den Vorsprüngen der am Rotor vorgesehenen Haltenut befestigt, so dass die im Betrieb der thermischen Strömungsmaschine auftretenden Fliehkräfte der Schaufeln von dem Rotor und insbesondere von dessen Vorsprüngen aufgenommen werden. Zudem treten an den Laufschaufeln Strömungsbelastungen auf, die sich mit den Zentrifugalkräften überlagern. Auch diese werden von der Laufschaufelverhakung in den Rotor übertragen.

Im Detail wird dabei unterschieden zwischen Haltenuten, die sich entlang der Umfangsrichtung erstrecken und zwischen Haltenuten, die sich in axialer Richtung erstrecken, jeweils bezogen auf die Rotationsache des Rotors. Bei axialen Haltenuten sitzt in jeder Haltenut lediglich eine einzige Laufschaufel, wohingegen bei sich in Umfangsrichtung erstreckenden Haltenuten alle Schaufeln des betreffenden Schaufelkranzes in dieser einen Haltenut gehalten sind.

Es hat sich herausgestellt, dass die Lebensdauer des Rotors auch von seiner im Betrieb auftretenden Belastung abhängt. Dazu zählen insbesondere die Anzahl der Start-Stopp-Zyklen sowie die Rotordrehzahl. Letztere beeinflusst die damit einhergehenden Fliehkräfte.

Im Detail wurde erkannt, dass insbesondere bei sich in Umfangsrichtung erstreckenden Haltenuten bei Belastungen die Spannungen insbesondere an den axial einander gegenüberliegenden Rändern der jeweiligen Kontaktflächen besonders hoch sind. Dies führt insbesondere in diesen Regionen bei niederzyklischen Belastungen zu einer vergleichsweise schnellen Ermüdung des Rotors. Um dieser schnelleren Ermüdung entgegen zu wirken, wurden die Abmaße des Rotors entsprechend vergrößert und/oder die Leistung der thermischen Strömungsmaschine ggf. beschränkt. Ebenso war es bekannt, die mechanischen Spannungen im Rotor zu reduzieren, indem die Kontaktflächen des Rotors über einen hohlkehlartigen Freistich in radial weiter innen angeordnete Teilflächen der Seitenwände der Haltenut übergehen. Diese Freistiche wurden zumeist als einfacher Radius ausgeführt.

Aus diesen Gründen besteht das Bedürfnis, die Spannungen an den Anlageflächen der Vorsprünge einer Haltenut des Rotors so gering wie möglich zu halten bei gleichzeitiger Verkleinerung der Baugröße des Schaufelträgers. Alternativ dazu soll unter der Annahme einer gleichbleibenden oder gar erhöhten Belastung die niederzyklische Lebensdauer des Schaufelträgers verbessert werden.

Aufgabe der Erfindung ist daher die Bereitstellung eines Schaufelträgers der eingangs genannten Art, der eine vergleichsweise geringe Baugröße bei verlängerter Lebensdauer benötigt und insbesondere bei niederzyklischer Belastung später ermüdet.

Zur Lösung dieser Aufgabe schafft die vorliegende Erfindung einen Schaufelträger der eingangs genannten Art, der dadurch gekennzeichnet ist, dass die Verrundung, im Querschnitt betrachtet, drei unmittelbar aufeinanderfolgende und ineinander übergehende Kreisbögen mit jeweils einem Radius umfasst, wobei der Radius des mittleren Kreisbogens größer ist als die Radien der beiden anderen Kreisbögen.

Der Erfindung liegt die Erkenntnis zugrunde, dass mit der genannten Ausgestaltung der Verrundung die an den axial benachbarten Rändern der Anlageflächen auftretenden Maximalspannungen deutlich reduziert werden können und damit der Spannungsverlauf dazwischen - im Querschnitt betrachtet längs der Rotationsachse - vergleichmäßigt und somit geglättet werden kann. Aufgrund der deutlich reduzierten Maximalspannung ist der Schaufelträger entweder höher belastbar und/oder für eine höhere niederzyklische Belastung besser ertüchtigt.

Zudem lässt sich diese einfache Kontur der Verrundung in der Form der drei aufeinanderfolgenden Kreisbögen sehr einfach fertigen, wodurch der Schaufelträger kostengünstig herstellbar wird.

Weitere Vorteile und bevorzugte Merkmale der Erfindung sind in den abhängigen Ansprüchen angegeben.

Gemäß einer ersten besonders bevorzugten Ausführungsform der Erfindung ist vorgesehen, dass der sich an die Anlagefläche anschließende Kreisbogen, im Querschnitt betrachtet, stufenfrei und kantenfrei in die Anlagefläche übergeht. Mit anderen Worten, der sich an die Anlagefläche anschließende Kreisbogen geht tangential in die Anlagefläche über. Hierdurch wird an dieser Stelle der Seitenwandkontur eine Unstetigkeitsstelle mit lokal erhöhten mechanischen Spannungen vermieden.

Die Erfindung ist insbesondere bei Haltenuten anwendbar, die sich längs der Umfangsrichtung der nach außen weisenden Fläche erstrecken und somit endlos umlaufend sind. Alternativ ist die Erfindung ebenso anwendbar bei axial orientierten Haltenuten, bei denen in jeder Haltenut jeweils nur eine Laufschaufel angeordnet ist. Auch müssen in den Haltenuten nicht zwingend Laufschaufeln eines Schaufelkranzes befestigt werden. Ebenso ist denkbar, dass in der Haltenut andere, separat hergestellte Bestandteile des Rotors der thermischen Strömungsmaschine, beispielsweise Abdeckplatten, gehalten sind. Somit kann die Haltenut in unterschiedlichen Bereichen angewendet werden.

Nach einer weiteren bevorzugten Ausführungsform ist vorgesehen, dass der an die Teilfläche angrenzende Kreisbogen, im Querschnitt betrachtet, im Wesentlichen senkrecht an der Teilfläche angrenzt. Dadurch lässt sich die Verrundung vorzugsweise als hohlkehlförmiger Freistich ausgestalten, was die Kerbwirkung in dem den Freistich umgebenden Material des Schaufelträgers weiter reduziert. Zur Bildung einer hammerförmigen Haltenut ist die Anlagefläche bezogen zur Rotationsachse koaxial und/oder die Teilfläche senkrecht zur Rotationsachse angeordnet.

Zweckmäßigerweise erstreckt sich die Verrundung über einen Winkelbereich von 180°. Damit besteht ein hinreichend großer der Zugang für ein Werkzeug, mit dem der Freistich und somit die Verrundung herstellbar ist.

Gemäß einer weiteren besonders bevorzugten Ausführungsform der Erfindung ist vorgesehen, dass die Haltenut einen Nutgrund aufweist und es definiert werden können:

a) eine Nuthöhe A als senkrechter Abstand zwischen dem Nutgrund und der Anlagefläche,
b) ein erster Radius $R_1$ als Radius desjenigen Kreisbogens der Verrundung, der sich an die Anlagefläche anschließt,
c) ein zweiter Radius $R_2$ als Radius des mittleren Kreisbogens der Verrundung,
d) ein dritter Radius $R_3$ als Radius desjenigen Kreisbogens der Verrundung, der an die Teilfläche unmittelbar angrenzt,
e) ein dimensionsloser Radius $r_i$ mit i=1...3, der sich aus dem Verhältnis des jeweiligen Radius $R_i$, bezogen auf die Nuthöhe A ($r_i = R_i/A$ für i=1...3) ergibt,
wobei gilt:

$$0,1 <= r_1 <= 0,3$$

$$0,4 < r_2 <= 0,5$$

$$0,2 <= r_3 <= 0,4.$$

Eine derartige Verrundung reduziert insbesondere die lokalen maximalen Spannungen an den Seitenrändern der Anlageflächen.

Ein weiterer Vorteil dieser Ausgestaltung ist, dass die vorgeschlagene Maßnahme für die Querschnittskontur der Haltenut skaliert werden kann, d.h. diese Kontur lässt sich für unterschiedliche Turbinen- und/oder Verdichterstufen der betreffenden thermischen Strömungsmaschine verwenden.

Nach einer weiteren bevorzugten Ausgestaltung kann ein erster Radius $R_1$ als Radius desjenigen Kreisbogens der Verrundung definiert werden, der sich an die Anlagefläche anschließt und ein dritter Radius $R_3$ definiert werden als Radius desjenigen Kreisbogens der Verrundung, der an die Teilfläche angrenzt, wobei gilt:

$$0,5 <= R_1/R_3 <= 0,7.$$

Mithin ist $R_1$ kleiner als $R_3$.

Insgesamt hat sich jedoch herausgestellt, dass die vorgenannten Ausgestaltungen insbesondere dann eine Vergleichmäßigung der Belastung in den Vorsprüngen der Haltenuten herbeiführen kann, wenn der Schaufelträger als Radscheibe ausgebildet ist. Aufgrund ihrer axial begrenzten Länge - im Vergleich zu den eingangs genannten Wellenblöcken - und der zur ihrer Radialachse - unsymmetrischen Ausgestaltung kann die sich aus drei Kreisbögen zusammensetzende Verrundung eine Vergleichmäßigung der mechanischen Spannung in der Radscheibe bei Belastung durch die Laufschaufeln hervorrufen.

Selbstverständlich kann die Radscheibe nicht nur diejenige eines axial durchströmbaren Verdichters sein. Sie kann ebenso die einer Dampfturbine oder die einer Turbineneinheit einer Gasturbine sein.

Insgesamt betrifft die Erfindung somit einen Schaufelträger der eingangs genannten Art, bei dem zur Verlängerung der niederzyklischen Lebensdauer und zur Reduzierung der mechanischen Spannungen eine Verrundung zwischen der Anlagefläche und einer weiteren Teilfläche der Seitenwand vorgesehen ist, die sich - im Querschnitt betrachtet - aus drei aufeinanderfolgenden Kreisbögen zusammensetzt, wobei der mittlere Kreisbogen einen größeren Radius aufweist als die beiden benachbarten Kreisbögen. Hierdurch kann im Betrieb die durch die Laufschaufeln hervorgerufene mechanische Spannung im Laufschaufelträger lokal reduziert werden. Alternativ wäre auch eine Erhöhung der Drehzahl möglich oder es könnte ggf. ein erhöhter aerodynamischer Stufenwirkungsgrad erreicht werden, sofern eine Lebensdauerverlängerung nicht im Vordergrund steht. Weiter alternativ ließen sich auch der Massenstrom der thermischen Strömungsmaschine und somit insgesamt die Leistungsabgabe der thermischen Strömungsmaschine damit verbessern.

Die bisherige Beschreibung vorteilhafter Ausgestaltungen der Erfindung enthält zahlreiche Merkmale, die in den einzelnen Unteransprüchen teilweise zu einer Einheit zusammengefasst wiedergegeben sind. Diese Merkmale können jedoch zweckmäßigerweise auch einzeln betrachtet und zu weiteren Kombinationen zusammengefasst werden.

Die oben beschriebenen Eigenschaften, Merkmale und Vorteile der Erfindung sowie die Art und Weise, wie diese erreicht werden, werden im Zusammenhang mit der folgenden Beschreibung des Ausführungsbeispiels anhand der nachfolgenden Figuren näher erläutert.

Es zeigen schematisch:

FIG 1    ein erstes Ausführungsbeispiel eines Schaufelträgers in einer perspektivischen, teilgeschnittenen Darstellung,

FIG 2    den Ausschnitt X aus FIG 1 im Detail mit einer in der Haltenut des Schaufelträgers angeordneten Laufschaufel und

FIG 3    einen Ausschnitt durch den Querschnitt des Schaufelträgers im Bereich der Haltenut mit einer erfindungsgemäßen Verrundung.

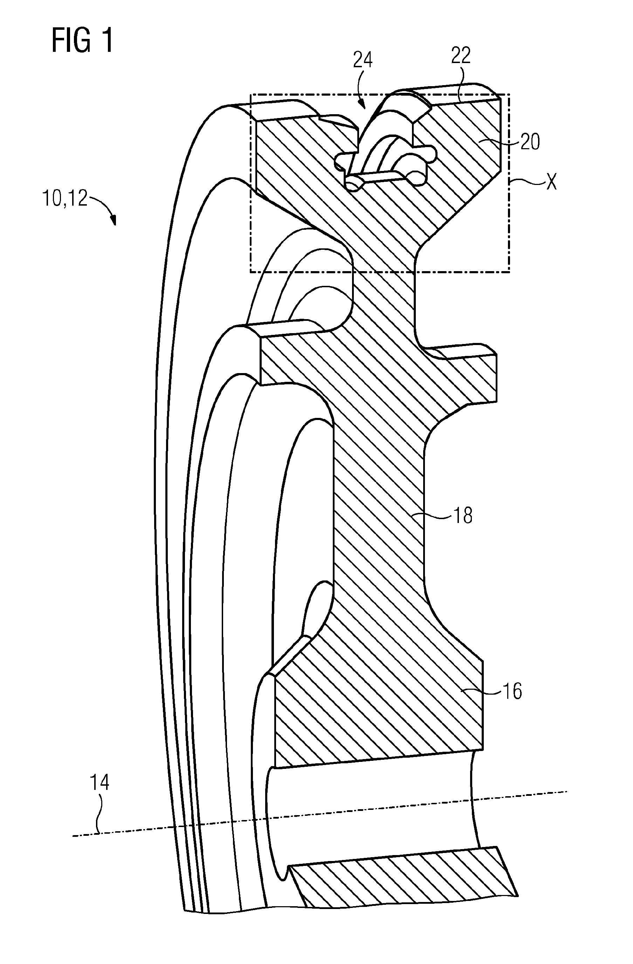

FIG 1 zeigt einen Schaufelträger 10 zur Befestigung von hier nicht dargestellten Laufschaufeln in einer thermischen Strömungsmaschine. Gemäß dem hier gezeigten Ausführungsbeispiel ist der Schaufelträger 10 als Radscheibe 12 ausgebildet, welche um eine in ihrem Zentrum liegende Rotationsachse 14 drehbar ist, sofern die Radscheibe 12 in einem Rotor einer thermischen Strömungsmaschine eingebaut ist.

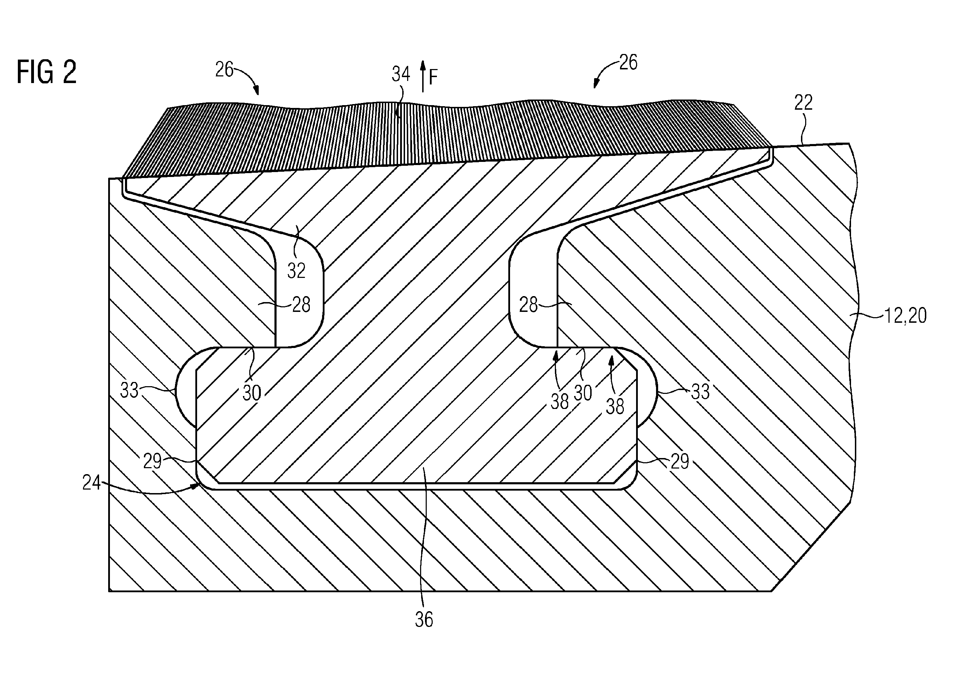

Die Radscheibe 12 umfasst einen Nabenbereich 16, an dem sich ein radial nach außen erstreckender Steg 18 anschließt. Wiederum radial weiter außen zum Steg 18 befindet sich ein Radscheibenwulst 20 mit einer radial nach außen weisenden Außenfläche 22. In dieser Außenfläche 22 ist eine in Umfangsrichtung verlaufende Haltenut 24 vorgesehen, die endlos ist. Die Querschnittskontur der Haltenut 24 ist in FIG 2 näher beschrieben.

FIG 2 zeigt das Detail X aus der Querschnittsdarstellung der FIG 1. Die Haltenut 24 ist im Radscheibenwulst 20 angeordnet und erstreckt sich in Umfangsrichtung der Außenfläche 22. Die Haltenut 24 umfasst neben einem Nutgrund 25 zwei einander gegenüberliegende, profilierte Seitenwände 26, die jeweils zumindest einen sich in die Haltenut 24 hineinragenden umlaufenden Vorsprung 28 aufweisen. Die nach innen gerichteten Flächen der Vorsprünge 28 dienen als Anlageflächen 30 für eine in der Haltenut 24 sitzende Laufschaufel 32. Im Detail umfasst die Laufschaufel 32 ein nur ansatzweise dargestelltes Schaufelblatt 34 sowie einen daran angeordneten Laufschaufelfuß 36, dessen Kontur zumindest im Bereich der Anlagefläche 30 so gewählt ist, dass dieser spätestens unter Fliehkrafteinwirkung an den Anlageflächen 30 zum Anliegen kommt. Damit ist prinzipiell ein sicherer Halt der Laufschaufel 32 in der Haltenut 24 auch bei Einwirkung der Fliehkraft F gewährleistet.

Ob die Vorsprünge 28 endlos umlaufen oder nur größtenteils, wodurch eine vergleichsweise kurze Einführöffnung für die Montage der Laufschaufeln 32 bereitgestellt ist, ist für die Erfindung unerheblich. Ebenso unerheblich ist, ob der in der Haltenut 24 angeordnete Schaufelkranz so genannte Zwischenstücke, die jeweils zwischen zwei unmittelbar benachbarten Laufschaufeln 32 angeordnet sein können, aufweist oder nicht.

Die Seitenwände 26 umfassen neben der Anlagefläche 30 eine weitere Teilfläche 29, die im Bezug auf die jeweilige Anlagefläche 30 radial weiter innen angeordnet ist. Zwischen der Anlagefläche 30 und der Teilfläche 29 ist jeweils eine Verrundung 33 vorgesehen. Diese ist vorzugsweise derart, dass sich ein hohlkehlartiger Freistich ergibt.

Je Anlagefläche 30 existieren axial einander benachbarte Ränder 38, an denen bei konventionellen Haltenuten aufgrund der fliehkraftbelasteten Laufschaufel bisher die höchsten mechanischen Spannungen im Material des Vorsprungs auftraten. Im jeweils dazwischenliegenden Bereich der Anlagefläche waren die bisher aufgetretenen mechanischen Spannungen signifikant geringer.

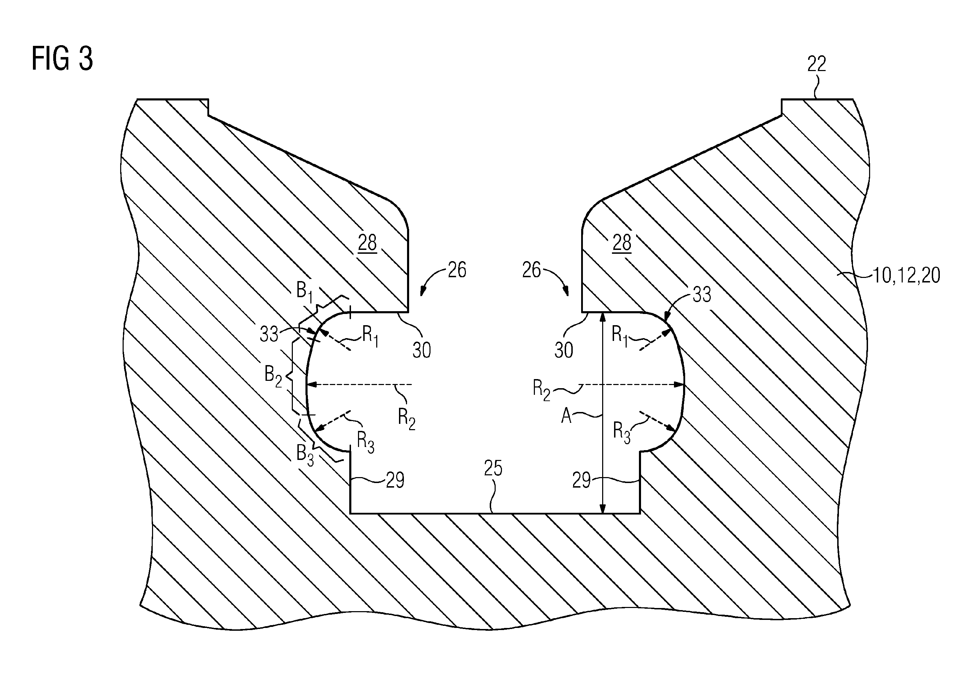

Die erfindungsgemäße Querschnittskontur der Verrundung 33 ist im Detail in FIG 3 dargestellt.

Wie in allen Figuren sind identische Merkmale mit den gleichen Bezugszeichen versehen.

Die Verrundung 33 umfasst drei aufeinanderfolgende, ineinander übergehende Kreisbögen $B_1$, $B_2$ und $B_3$, deren ihnen zugeordnete Radien $R_1$, $R_2$ und $R_3$ unterschiedlich groß sind. Das ineinander Übergehen bedeutet stufen- und kantenfrei.

Es hat sich herausgestellt, dass, wenn der mittlere Radius $R_2$ geringfügig größer ist als der Radius $R_1$, dessen

Kreisbogen $B_1$ zur Anlagefläche 30 unmittelbar benachbart ist, und größer ist als Radius $R_3$, dessen Kreisbogen $B_3$ an die Teilfläche 29 angrenzt, eine besonders gute Vergleichmäßigung der Belastung im Vorsprung 28 erreicht werden kann, da die Spannungsspitzen an den axial angeordneten Rändern 38 der jeweiligen Anlagefläche 30 reduziert werden können.

**(FYI: Liebe Erfinder,** die nachfolgenden Werte sind nur ausgedacht, um ein konkretes Ausführungsbeispiel anzugeben, **die Definition des Abstands A = Nuttiefe prüfen Sie bitte!!!)** Gemäß dem hier gezeigten Ausführungsbeispiel kann der Radius $R_1$ einen Wert von 1 cm aufweisen, der Radius $R_2$ einen Wert von 2,4 cm und der Radius $R_3$ einen Wert von 1,5 cm. Zudem kann ein Abstand A zwischen einem Nutgrund 25 und der Anlagefläche 30 definiert werden, der gemäß diesem Ausführungsbeispiels 5 cm beträgt. Für ein dimensionsloses Verhältnis $r_i$, welches sich aus dem jeweiligen Radius $R_i$ des Kreisbogens $B_i$, bezogen auf den Abstand A ($r_i = R_i/A$) mit i=1...3, ergibt, gilt:

$$r_1 = R_1/A = \quad 1 \text{ cm} / 5 \text{ cm} = 0,2,$$

$$r_2 = R_2/A = 2,25 \text{ cm} / 5 \text{ cm} = 0,45$$

und

$$r_3 = R_3/A = \quad 1,5 \text{ cm} / 5 \text{ cm} = 0,3.$$

Ebenso gilt: $0,5 <= R_1/R_3 = 1 \text{ cm} / 1,5 \text{ cm} = 0,66 <= 0,7$.

Die Verrundung 33 erstreckt sich über einen Winkelbereich von 180°. Das bedeutet, dass der Anfangspunkt des Kreisbogens $B_1$ dem Endpunkt des Kreisbogens $B_3$ gegenüberliegt. Die Bogenlängen der Kreisbögen $B_1$ und $B_3$ sind geringer als die Bogenlängen des Kreisbogens $B_2$. Die Übergänge zwischen den Kreisbögen $B_1$, $B_2$ sowie $B_2$ und $B_3$ sind so gewählt, dass eine Stufe vermieden wird, ebenso wie beim Übergang von der Anlagefläche 30 auf den Kreisbogen $B_1$. Das Ende des Kreisbogens $B_3$ trifft in etwa in einem rechten Winkel auf die Teilfläche 29.

Gleichwohl die Erfindung anhand einer sich in Umfangsrichtung erstreckenden Haltenut eingehend erläutert wurde, ist das Konzept der erfindungsgemäßen Verrundung ebenso bei Haltenuten anwendbar, die sich zumindest teilweise in Axialrichtrung der Rotationsachse erstrecken.

**Patentansprüche**

1. Schaufelträger (10) zur Befestigung von weiteren Bestandteilen eines Rotors einer thermischen Strömungsmaschine, insbesondere Laufschaufeln (32),
   welcher um eine zentrale Rotationsachse (14) rotierbar ist und in einer nach außen weisenden Fläche (22) zumindest eine Haltenut (24) zur Befestigung einer oder mehrerer Laufschaufeln (32) oder der weiteren Bestandteile aufweist,
   wobei die Haltenut (24) zwei axial einander gegenüberliegende Seitenwände (26) umfasst, die jeweils zumindest einen sich in die Haltenut (24) hineinragenden Vorsprung (28) mit einer zur Rotationsachse (14) weisenden Anlagefläche (30) aufweisen, wobei zwischen jeder Anlagefläche (30) und einer davon radial weiter innen angeordneten Teilfläche (29) der jeweiligen Seitenwand (26) eine Verrundung (33) vorgesehen ist,
   **dadurch gekennzeichnet, dass**
   die Verrundung (33), im Querschnitt betrachtet, mindestens drei aufeinander folgende, ineinander übergehende Kreisbögen ($B_1$, $B_2$, $B_3$) mit jeweils einem Radius ($R_1$, $R_2$, $R_3$) umfasst, und dass der Radius ($R_2$) des mittleren Kreisbogens ($B_2$) größer ist als die Radien ($R_1$, $R_3$) der beiden anderen Kreisbögen ($B_1$, $B_3$).

2. Schaufelträger (10) nach Anspruch 1,
   bei dem der sich an die Anlagefläche (30) anschließende Kreisbogen ($B_1$) im Querschnitt betrachtet kantenfrei in die Anlagefläche (30) übergeht.

3. Schaufelträger (10) nach Anspruch 1 oder 2,
   bei dem sich die Haltenut (24) längs der Umfangsrichtung der nach außen weisenden Fläche erstreckt und endlos ausgestaltet ist oder bei der sich die jeweilige Haltenut (24) zumindest teilweise in Axialrichtung der Rotationsachse (14) erstreckt.

**4.** Schaufelträger nach Anspruch 1, 2 oder 3,
bei dem der an die Teilfläche (29) angrenzende Kreisbogen (B$_3$), im Querschnitt betrachtet, im Wesentlichen senkrecht an der Teilfläche (29) angrenzt.

**5.** Schaufelträger (10) nach einem der Ansprüche 1 bis 4,
bei dem die Anlagefläche (30), bezogen zur Rotationsachse (14), koaxial und/oder die Teilfläche (29) senkrecht zur Rotationsachse (14) angeordnet ist.

**6.** Schaufelträger (10) nach Anspruch 5,
bei dem sich die Verrundung (33) über einen Winkelbereich von 180° erstreckt.

**7.** Schaufelträger (10) nach einem der Ansprüche 1 bis 6, bei dem die Haltenut (24) einen Nutgrund aufweist und es definiert werden können:

a) eine Nuthöhe A als senkrechter Abstand zwischen dem Nutgrund (25) und der Anlagefläche (30),
b) ein erster Radius (R$_1$) als Radius desjenigen Kreisbogens (B$_1$) der Verrundung (33), der sich an die Anlagefläche (30) anschließt,
c) ein zweiter Radius (R$_2$) als Radius des mittleren Kreisbogens (B$_2$) der Verrundung (33),
d) ein dritter Radius (R$_3$) als Radius desjenigen Kreisbogens (B$_3$) der Verrundung (33), der an die Teilfläche (29) angrenzt,
e) ein dimensionsloser Radius r$_i$ (= R$_i$/A, für i=1...3), der sich aus dem Verhältnis des jeweiligen Radius R$_i$, für i=1...3, bezogen auf die Nuthöhe A ergibt,
wobei gilt:

$$0,1 <= r_1 <= 0,3$$

$$0,4 < r_2 <= 0,5$$

$$0,2 <= r_3 <= 0,4.$$

**8.** Schaufelträger (10) nach einem der Ansprüche 1 bis 6, bei dem definiert werden kann:

b) ein erster Radius (R$_1$) als Radius desjenigen Kreisbogens (B$_1$) der Verrundung (33), der sich an die Anlagefläche (30) anschließt,
d) ein dritter Radius (R$_3$) als Radius desjenigen Kreisbogens (B$_3$) der Verrundung (33), der an die Teilfläche (29) angrenzt, wobei gilt:

$$0,5 <= R_1/R_3 <= 0,7$$

**9.** Schaufelträger (10) nach einem der Ansprüche 1 bis 7, ausgebildet als eine Radscheibe (12) einer axial durchströmbaren thermischen Strömungsmaschine, insbesondere Verdichters.

FIG 1

FIG 2

EP 3 159 483 A1

FIG 3

EP 3 159 483 A1

Europäisches
Patentamt

European
Patent Office

Office européen
des brevets

**EUROPÄISCHER RECHERCHENBERICHT**

Nummer der Anmeldung

EP 15 19 1026

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 1 698 758 A2 (ALSTOM TECHNOLOGY LTD [CH]) 6. September 2006 (2006-09-06) * Absätze [0004], [0005]; Abbildung 1 * ----- | 1-9 | INV. F01D5/30 |
| Y | DE 195 37 549 A1 (GEN ELECTRIC [US]) 18. April 1996 (1996-04-18) * Seite 4, Zeile 11 - Zeile 27; Abbildungen 3, 4 * ----- | 1-9 | |
| A | DE 103 10 431 A1 (ALSTOM TECHNOLOGY LTD BADEN [CH]) 23. September 2004 (2004-09-23) * Abbildungen * ----- | 1-9 | |
| A | CH 704 617 A1 (ALSTOM TECHNOLOGY LTD [CH]) 14. September 2012 (2012-09-14) * Abbildung 5 * ----- | 1-9 | |
| A | DE 44 35 268 A1 (ABB MANAGEMENT AG [CH]) 4. April 1996 (1996-04-04) * Abbildung 2 * ----- | 1-9 | RECHERCHIERTE SACHGEBIETE (IPC) F01D |

Der vorliegende Recherchenbericht wurde für alle Patentansprüche erstellt

| Recherchenort | Abschlußdatum der Recherche | Prüfer |
|---|---|---|
| München | 29. März 2016 | Georgi, Jan |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 19 1026

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-03-2016

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP | 1698758 | A2 | 06-09-2006 | EP | 1698758 | A2 | 06-09-2006 |
| | | | | US | 2006188373 | A1 | 24-08-2006 |
| DE | 19537549 | A1 | 18-04-1996 | DE | 19537549 | A1 | 18-04-1996 |
| | | | | JP | 3884496 | B2 | 21-02-2007 |
| | | | | JP | 4008015 | B2 | 14-11-2007 |
| | | | | JP | H08226303 | A | 03-09-1996 |
| | | | | JP | 2006312942 | A | 16-11-2006 |
| | | | | KR | 100380511 | B1 | 19-06-2003 |
| | | | | US | 5474423 | A | 12-12-1995 |
| DE | 10310431 | A1 | 23-09-2004 | DE | 10310431 | A1 | 23-09-2004 |
| | | | | US | 2004179944 | A1 | 16-09-2004 |
| CH | 704617 | A1 | 14-09-2012 | AU | 2012200534 | A1 | 27-09-2012 |
| | | | | CH | 704617 | A1 | 14-09-2012 |
| | | | | GB | 2488864 | A | 12-09-2012 |
| DE | 4435268 | A1 | 04-04-1996 | DE | 4435268 | A1 | 04-04-1996 |
| | | | | EP | 0705959 | A2 | 10-04-1996 |
| | | | | JP | H08100603 | A | 16-04-1996 |
| | | | | US | 5554005 | A | 10-09-1996 |

EPO FORM P0461

Für nähere Einzelheiten zu diesem Anhang : siehe Amtsblatt des Europäischen Patentamts, Nr.12/82